# FASCICULE DE BREVET EUROPEEN

(11) **EP 0 964 253 B1**
(45) Date de publication et mention de la délivrance du brevet: **08.03.2006**
(21) Numéro de dépôt: 99401408.2
(22) Date de dépôt: 10.06.1999
(51) Int. Cl.: G01R 1/08, B60K 37/02

(54) **Tableau de bord plat**
Flaches Armaturenbrett
Flat instrument panel

(30) Priorité: 10.06.1998 FR 9807285
(43) Date de publication de la demande: 15.12.1999
(73) Titulaire: JOHNSON CONTROLS AUTOMOTIVE ELECTRONICS, 95526 Cergy Pontoise Cédex (FR)
(72) Inventeur: Fournier, Joel, 95000 Cergy (FR)
(74) Mandataire: Bloch, Gérard

(56) Documents cités:
- FR-A- 1 229 549
- FR-A- 2 648 090

## Description

L'invention concerne les tableaux de bord, principalement de véhicule automobile.

Un tableau de bord peut comporter des indicateurs avec des mouvements pour l'entraînement d'aiguilles devant des cadrans sérigraphiés, avec d'autres indications, sur une face avant support, le tout étant disposé derrière une vitre de protection antireflet fixée à un coffret d'habillage, appelé réhaut.

Les tableaux de bord ainsi équipés d'un tel réhaut, avec sa vitre, sont d'un encombrement, surtout en profondeur, qui peut être considéré comme préjudiciable.

La demanderesse a cherché à développer des tableaux de bord plats et c'est ainsi qu'elle propose son invention.

L'invention concerne un tableau de bord comportant une face avant et au moins un indicateur avec une aiguille indicatrice commandée par un mouvement et des caractères d'indication rapportés sur la face avant, caractérisé par le fait que l'aiguille est disposée à l'arrière de la face avant.

Ainsi, grâce à la disposition relative de l'aiguille et de la face avant, il n'y a plus besoin ni de vitre de protection, ni de réhaut. La face avant, à proximité de l'aiguille, assure aussi une fonction de protection de cette aiguille.

Le tableau de bord de l'invention peut être plat. Le tableau de bord de l'invention peut être implanté n'importe où dans l'habitacle, en tout état de cause, il peut être sorti de la planche de bord.

Les caractères d'indication peuvent être rapportés d'un côté ou de l'autre de la face avant.

Dans une forme de réalisation intéressante de l'invention, la face avant est transparente et l'aiguille est soit teintée d'une couleur sombre, soit illuminée.

Dans une autre forme de réalisation du tableau de bord de l'invention, l'aiguille s'étend devant un fond clair, par exemple lumineux, par exemple blanc, pour faire apparaître les caractères d'indication et l'aiguille indicatrice en ombres chinoises.

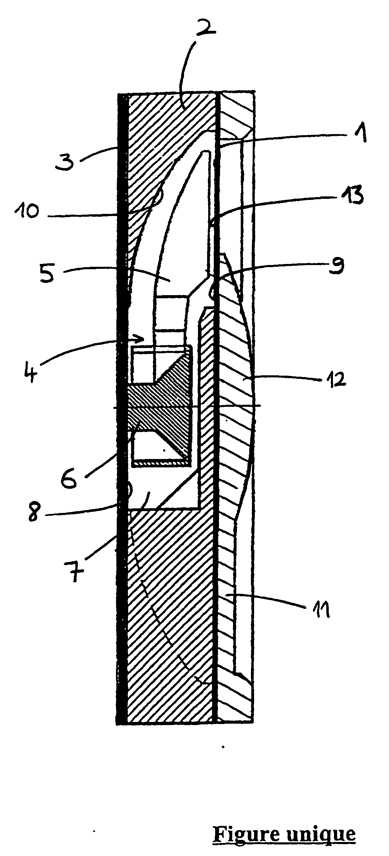

L'invention sera mieux comprise à l'aide de la description suivante d'une forme de réalisation particulière du tableau de bord de l'invention en référence à la figure unique annexée qui représente une vue en coupe latérale de la forme de réalisation particulière du tableau de bord de l'invention.

Le tableau de bord représenté est intégré dans une planche de bord d'un véhicule automobile et comprend un indicateur à aiguille 4, en l'espèce un compteur de vitesse, une face avant 1, un boîtier 2 et une carte de circuit imprimé 3.

On soulignera que c'est par souci de clarté que le tableau de bord décrit ici ne comprend qu'un seul indicateur.

D'emblée, on notera que, dans la description du tableau de bord, l'avant du tableau de bord est situé du côté conducteur du véhicule automobile.

La face avant 1 consiste ici en un masque transparent, en polycarbonate. Des caractères d'indication sérigraphiés 13, de couleur sombre, ici noire, sont rapportés sur la face avant 1, du côté arrière de celle-ci, et représentent un cadran de compteur de vitesse. Du côté avant, la face avant 1 est grainée afin d'être antireflet.

L'indicateur à aiguille 4 comporte une aiguille indicatrice 5 et un moteur 6, ou "mouvement", de commande et d'entraînement en rotation de l'aiguille 5.

Le boîtier 2 et le circuit imprimé 3 sont disposés à l'arrière de la face avant 1. Le boîtier 2 est en appui, à l'avant, contre la face avant 1 et, à l'arrière, contre la carte de circuit imprimé 3 qui est parallèle à la face avant 1. Un logement 7 de réception de l'indicateur à aiguille 4 est ménagé dans le boîtier 2. Ce logement 7 est ouvert, à l'arrière, par une ouverture 8 à travers laquelle le mouvement 6 est monté sur la carte 3, et, à l'avant, par une ouverture 9 de passage de la lumière. Cette ouverture avant 9 s'étend au droit des caractères d'indication sérigraphiés 13 et présente la forme d'une portion d'anneau.

Le logement 7 présente des parois intérieures de couleur blanche et forme ainsi une boîte à lumière. L'ouverture avant 9, décalée par rapport à l'ouverture arrière 8, est située au droit d'une paroi de fond 10 du logement 7, de forme concave, agencée pour réfléchir vers l'avant la lumière émise par une source de lumière, non représentée sur la figure.

L'aiguille indicatrice 5 est teintée d'une couleur sombre, ici noire, et disposée à l'arrière de la face avant 1, à proximité de celle-ci, à l'intérieur du logement 7, au droit de l'ouverture avant 9 et devant la paroi de fond 10.

On soulignera que la face avant 1, du fait qu'elle s'étend à l'avant de l'aiguille indicatrice 4, assure la protection de celle-ci.

Le logement 7 contient la source de lumière évoquée ci-dessus. Il s'agit en l'espèce d'une source électroluminescente de lumière (LED), destinée à éclairer l'intérieur du logement 7 et notamment la paroi de fond 10.

Le tableau de bord comprend en outre un capot avant 11, rapporté à l'avant de la face avant 1, s'étendant, par une partie 12, au droit du mouvement de l'indicateur à aiguille 4 afin de cacher cette partie à la vue du conducteur. Bien évidemment, le capot 11 ne masque pas les caractères d'indication sérigraphiés 13.

En fonctionnement, la source de lumière éclaire la paroi de fond 10 qui, par réflexion, éclaire l'aiguille indicatrice 5 et les caractères d'indication sérigraphiés 13, par l'arrière. L'aiguille 5 s'étend ainsi devant un fond clair, lumineux, constitué par la paroi de fond 10 illuminée. La boîte à lumière 7 éclaire donc les côtés non visibles par le conducteur, situé à l'avant de la face avant 1, de l'aiguille indicatrice 5 et des caractères d'indication sérigraphiés 13. Il en résulte que l'aiguille 5 et les caractères d'indication 13 apparaissent en ombres chinoises devant le fond lumineux 10, à travers la face avant 1, à la vue du conducteur.

Au lieu d'être rapportés du côté arrière de la face avant 1, les caractères d'indication sérigraphiés pourraient tout aussi bien être rapportés du côté avant de la face avant.

Dans une variante de réalisation, le tableau de bord comprend, comme précédemment décrit, une face avant transparente sur laquelle sont rapportés des caractères d'indication, et, à l'arrière de la face avant, un boîtier, ménageant un logement de réception d'un indicateur avec aiguille indicatrice, et une carte de circuit imprimé. L'aiguille indicatrice est disposée à l'arrière de la face avant, à proximité de celle-ci, au droit d'une ouverture de passage de la lumière ménagée dans le boîtier.

Dans cette variante, l'aiguille fait fonction de conduit optique et le logement de réception de l'indicateur comprend une source de lumière et un conduit optique destiné à conduire la lumière depuis la source de lumière jusqu'à l'aiguille indicatrice.

En fonctionnement, la lumière émise par la source de lumière pénètre dans l'aiguille indicatrice qui s'illumine et apparaît lumineuse, à travers la face avant, à la vue du conducteur situé à l'avant de la face avant.

Les caractères d'indication sérigraphiés, rapportés du côté avant de la face avant, sont éclairés de jour, par l'éclairage ambiant, par l'avant, et, de nuit, par l'arrière, par l'éclairage provenant de l'aiguille indicatrice lumineuse.

On soulignera que, l'aiguille indicatrice étant disposée à l'arrière de la face avant, le tableau de bord de l'invention ne comprend ni vitre de protection, ni réhaut d'habillage, et, de ce fait, est bien plus plat que les tableaux de bord de l'art antérieur comportant un réhaut d'habillage et une vitre de protection.

## Revendications

1. Tableau de bord comportant une face avant (1) et au moins un indicateur (4) avec une aiguille indicatrice (5) commandée par un mouvement (6) et des caractères d'indication (13) rapportés sur la face avant (1), **caractérisé par le fait que** l'aiguille (5) est disposée à l'arrière de la face avant (1) qui assure la protection de l'aiguille.

2. Tableau de bord selon la revendication 1, dans lequel les caractères d'indication (13) sont rapportés du côté arrière de la face avant (1).

3. Tableau de bord selon la revendication 1, dans lequel les caractères d'indication sont rapportés du côté avant de la face avant.

4. Tableau de bord selon l'une des revendications 1 à 3, dans lequel la face avant (1) est transparente et l'aiguille (5) est teintée d'une couleur sombre.

5. Tableau de bord selon l'une des revendications 1 à 3, dans lequel la face avant est transparente et l'aiguille est illuminée.

6. Tableau de bord selon la revendication 4, dans lequel l'aiguille (5) s'étend devant un fond clair (10), pour faire apparaître les caractères d'indication (13) et l'aiguille indicatrice (5) en ombres chinoises.

7. Tableau de bord selon l'une des revendications 1 à 6, dans lequel la face avant (1) est grainée afin d'être antireflet.

## Claims

1. Instrument panel comprising a front face (1) and at least one indicator (4) with an indicator needle (5) controlled by a movement (6) and indicator characters (13) affixed to the front face (1), **characterized in that** the needle (5) is positioned behind the front face (1) which protects the needle.

2. Instrument panel according to Claim 1, in which the indicator characters (13) are affixed to the rear side of the front face (1).

3. Instrument panel according to Claim 1, in which the indicator characters are affixed to the front side of the front face.

4. Instrument panel according to one of Claims 1 to 3, in which the front face (1) is transparent and the needle (5) is in a dark colour.

5. Instrument panel according to one of Claims 1 to 3, in which the front face is transparent and the needle is illuminated.

6. Instrument panel according to Claim 4, in which the needle (5) extends in front of a pale background (10) to reveal the indicator characters (13) and the indicator needle (5) in silhouette.

7. Instrument panel according to one of Claims 1 to 6, in which the front face (1) is grained to afford antireflection properties.

## Patentansprüche

1. Armaturenbrett mit einer Vorderseite (1) und mindestens einer Anzeige (4) mit einer Anzeigenadel (5), die von einer Bewegung (6) gesteuert wird, und Anzeigezeichen (13), die auf die Vorderseite (1) angebaut sind, **dadurch gekennzeichnet, dass** die Nadel (5) auf der Rückseite der Vorderseite (1), die den Schutz der Nadel sicherstellt, angeordnet ist.

2. Armaturenbrett nach Anspruch 1, bei dem die Anzeigezeichen (13) auf der Rückseite der Vorderseite (1) angebaut sind.

3. Armaturenbrett nach Anspruch 1, bei dem die Anzeigezeichen auf der Vorderseite der Vorderseite angebaut sind.

4. Armaturenbrett nach einem der Ansprüche 1 bis 3, bei dem die Vorderseite (1) durchsichtig und die Nadel (5) in einer dunklen Farbe gefärbt ist.

5. Armaturenbrett nach einem der Ansprüche 1 bis 3, bei dem die Vorderseite durchsichtig ist und die Nadel leuchtet.

6. Armaturenbrett nach Anspruch 4, bei dem sich die Nadel (5) vor einem hellen Hintergrund (10) erstreckt, um die Anzeigezeichen (13) und die Anzeigenadel (5) als Schatten erscheinen zu lassen.

7. Armaturenbrett nach einem der Ansprüche 1 bis 6, bei dem die Vorderseite (1) körnig ist, um reflexvermindernd zu sein.
